# EUROPEAN PATENT APPLICATION

(11) **EP 4 467 906 A1**
(43) Date of publication of application: **27.11.2024**
(21) Application number: 22921773.2
(22) Date of filing: 08.02.2022
(51) Int. Cl.: F25D 3/08, A47J 41/00

(54) **REFRIGERATION CONTAINER**

(30) Priority: 21.01.2022 ES 202230093 U
(71) Applicant: Fernández Peláez, Antonio, 14900 Lucena (Córdoba) (ES)
(72) Inventor: Fernández Peláez, Antonio, 14900 Lucena (Córdoba) (ES)
(74) Representative: Ungria López, Javier
(86) International application number: PCT/ES2022/070058
(87) International publication number: WO 2023/139298

(57) **Abstract**

The present invention relates to a thermal insulating container that slows the rise in temperature, providing a configuration that increases both the interior insulation of the container and its ability to reflect emissions incident on the exterior of the container, insulating same from external radiation and convection, for which it is characterised by comprising an inner aluminium coating (2) on the entire inner surface of the container and an outer aluminium coating (3) on the entire outer surface of the container (1). The inner (2) and outer (3) coatings comprise one or more sheets of aluminium. Furthermore, the container comprises a lid (4), the outer surface of which is provided with an outer coating (3), and the back surface of which forms part of the interior of the container (1) and is provided with an inner coating (2). The inner (2) and outer (3) coatings are glued to the surface.

## Description

### Object of the invention

The invention consists of a refrigeration container, which aims to increase cooling time, for which it provides a configuration that increases both the interior insulation of the container and its ability to reflect emissions incident on the exterior of the container, insulating same from external radiation and convection.

The invention is applicable to all types of refrigeration containers or refrigerators, more especially in portable expanded polystyrene refrigerators that are used to keep their interior in a low temperature range for the greatest amount of time, keeping any object they contain cold, such as food, drinks, medicines or drugs, organs, etc.

### Background of the invention

In the state of the art, the use of thermal containers configured to provide a thermally insulated interior space is known, in order to keep food or other objects refrigerated that, for various reasons, must be kept at low temperatures for as long as possible; said containers can be, for example, thermal containers or conventional expanded polystyrene refrigerators, designed to keep food, medical items or drugs refrigerated. All of them have a common problem, which is the time limit of the insulating effect.

In this sense, it is worth mentioning Japanese patent JPH05132085A which describes a thermal insulating material that is applied to a box or similar in which aluminium powder is added between the sheets of the material that makes up the box, so that the insulating effect of said box is enhanced to maintain a temperature range of between 5-10°C therein for several hours.

It is also worth mentioning Japanese patent JP2009149380A, which describes a refrigerator intended for food delivery, which uses sheets of aluminium as thermal insulation in the lower portion of its inner cavity. It also describes the use of insulating resins on the upper surface of the cavity.

The preceding documents have the aforementioned problem, in other words, they do not maintain the cooling time required for certain applications.

The invention provides a thermal container that allows the cooling time to be increased compared to the cited documents, in such a way that it alleviates the aforementioned problem, and for which it provides for the provision of a coating of one or more sheets of aluminium both in the interior and on the outer surface of the container, so that it enhances the insulating effect and reduces the energy that, due to radiation, is incident on the surface of the container in question.

### Description of the invention

To achieve the objectives and solve the aforementioned problems, the invention comprises an inner aluminium coating that covers the entire inner surface of the container, and further comprises an outer aluminium coating that covers the entire outer surface of the container.

In one embodiment of the invention, the inner and outer coatings are made up of a sheet of aluminium, but it also provides for the possibility that they can be made up of a plurality of sheets of aluminium that are joined together.

By adding one or more sheets of aluminium inside the cavity, the insulating effect of the cavity is enhanced, whereas by adding the aluminium coating on the outer surface, given the physical features of the aluminium, up to 98% of the incident energy due to radiation, such as solar energy that reaches the surface of the container in question, is reflected, thus avoiding up to 98% of the heat energy that could be incident due to radiation on the container, so important in refrigerators of this type, at the same time that it enhances interior thermal insulation, which is so important to maintain the inner cavity at a low temperature for the longest period of time possible.

In the preferred embodiment of the invention, the container is provided with a lid, the outer surface of which comprises an outer coating; and the surface of its back, which forms part of the interior of the container, is provided with an inner coating.

Furthermore, in the preferred embodiment, it is envisaged that the coatings on the inner and outer surfaces of the container are fixed by using conventional specific glue, for specific materials that make up the package, such as expanded polystyrene and thin sheets of metal. In this way, the sheets of aluminium remain perfectly adhered to both the inner and outer surface, which confers great durability to the container. These glues are completely safe and harmless to humans and the environment.

Consequently, the described configuration of the invention makes it possible to alleviate the main existing problem with regards to the time limit of the thermal insulating effect inside the containers, in order to maintain low temperatures, without the possibility of being able to extract external heat, and all this in a simple and inexpensive way that enhances the insulating effect.

In short, the main advantages presented by the invention compared to the state of the art are:
- It provides a thermal insulating effect much superior to the conventional effect and far more long-lasting, which allows the insulating effect to be increased by up to 40%, as has been experimentally proven.
- The objects to be kept refrigerated can be kept for much longer at a constant, low temperature.
- It reduces thermal energy radiation incident on the surface of the thermal container, increasing its useful life.
- It reduces the production cost of the thermal container, since the addition of sheets of aluminium during manufacturing is inexpensive.
- It facilitates cleaning of the inner surface of the container, which can be stained with liquids or with scraps of food, since sheet aluminium is a material that is easier to clean and more waterproof than expanded polystyrene.

### Description of the figures

To complete the description, and for the purpose of helping to make the features of the invention more readily understandable, this description is accompanied by a set of figures constituting an integral part of the same, which by way of illustration and not limitation represents the following:

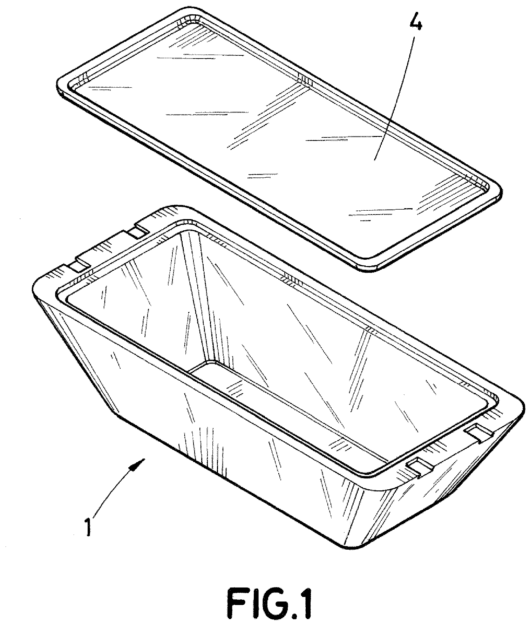

Figure 1 shows a perspective view of an exemplary embodiment, in which the container is provided with a lid, which is shown exploded.

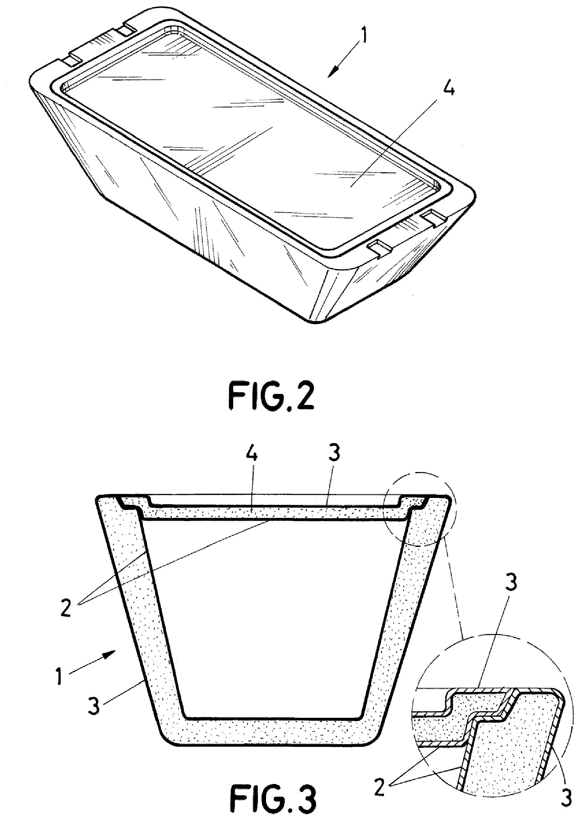

Figure 2 shows a perspective view of the container of the previous figure, with the lid on.
Figure 3 shows a cross section of the container of the previous figures and a detail of the same.
Figure 4 shows a graph of the temperature evolution of experimental assays carried out to quantify the improvement in insulation provided by the container of the invention.

### Preferred embodiment of the invention

A description of the invention is provided below based on the aforementioned figures, which show a refrigeration container 1, which is provided with an inner aluminium coating 2 that covers the entire inner surface of the container 1, and further comprises an outer coating 3, which covers the entire outer surface of the container 1.

The main application of this container is to maintain different drinks and/or food for as long as possible and in a low temperature range, such as during a day at the beach, where ice, cold drinks, and certain foods that need a medium-low temperature to prevent spoiling, etc. must be kept cold for 10-12 hours.

Another application can be for use in medicine refrigerators, especially during transport, in which items ranging from organs to medicines or drugs are carried.

In the exemplary embodiment, the inner 2 and outer 3 coatings are made up of a sheet of aluminium, but the possibility that they could have a series of sheets of aluminium joined together is also contemplated.

The addition of these coatings, on the one hand, enhances the insulating effect of the interior of the container and, on the other hand, allows the incident energy due to radiation to be reflected on the outer surface, reflecting up to 98% of this energy, as is the case, for example, of solar energy incident on the surface of the container.

In the example, the container has been made with expanded polystyrene, on which the sheets of aluminium are adhered using a specific conventional glue for this specific material, leaving the sheets of aluminium perfectly adhered to both the inner and outer surface of the container, which confers it great durability. Obviously, the container could also be made with any other known insulating material on which the sheets of aluminium are glued using the corresponding specific glue for each material used.

In the example, the container is provided with a lid 4, the outer surface of which comprises an outer coating 3, and its back is provided with an inner coating 2, to enhance the insulating effect, as has already been described.

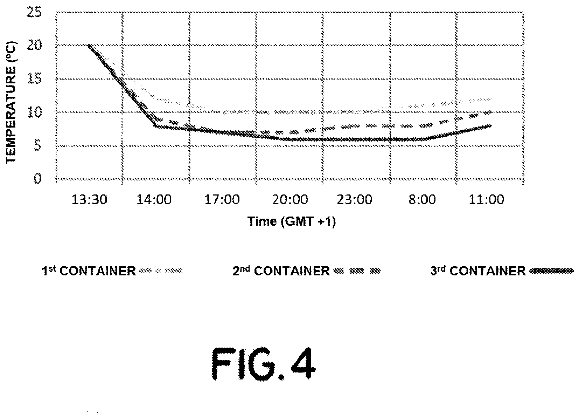

To verify the effectiveness of the improvement in thermal insulation provided by the container of the invention, an experiment has been carried out with three thermal containers; a first conventional container without lining, another second container with only an inner aluminium lining, and a third container, corresponding to the invention, which is provided with both inner and outer aluminium lining. An ice pack was placed in these containers and its temperature was measured every 3 hours. A graph of the temperature evolution of each container over the time of each measurement was obtained, as shown in figure 4. As can be verified, the result was more than satisfactory, since in the third container, corresponding to the invention, it is found that after 21 hours the final temperature was four degrees Celsius lower than in the first container and two degrees lower than in the second container, and it turned out that the ice pack in the third container was in a much better state of conservation than in the other two containers. According to the measurements taken, the insulating effect of the third container of the invention provides an increase of up to 40% compared to the other two containers.

It should be noted that if this experiment is carried out during warmer periods of the year, the insulating effect in the third container would be enhanced by even more than 40%.

## Claims

1. A refrigeration container, **characterised in that** it comprises an inner aluminium coating (2) on the entire inner surface of the container and an outer aluminium coating (3) on the entire outer surface of the container (1).

2. The container, according to claim 1, wherein the inner (2) and outer (3) coatings comprise a sheet of aluminium.

3. The container, according to claim 1, wherein the inner (2) and outer (3) coatings comprise a plurality of sheets of aluminium.

4. The container, according to any one of the preceding claims, comprising a lid (4), the outer surface of which is provided with an outer coating (3) and the back surface of which forms part of the interior of the container (1) and is provided with an inner coating (2).

5. The container, according to any one of the preceding claims, wherein said container (1) is made of expanded polystyrene.

6. The container, according to any one of the preceding claims, wherein the inner (2) and outer (3) coatings are glued to the surface.
